Europäisches Patentamt

(19) European Patent Office  (11) Publication number:  **0 109 720**
**B1**
Office européen des brevets

(12) **EUROPEAN PATENT SPECIFICATION**

(45) Date of publication of patent specification: **25.02.87**  (51) Int. Cl.⁴: **A 22 C 7/00**

(21) Application number: **83201646.3**

(22) Date of filing: **17.11.83**

(54) Device for moulding meat in vacuo.

(30) Priority: **18.11.82 FR 8219619**

(43) Date of publication of application:
**30.05.84 Bulletin 84/22**

(45) Publication of the grant of the patent:
**25.02.87 Bulletin 87/09**

(84) Designated Contracting States:
**AT BE CH DE FR GB IT LI LU NL SE**

(56) References cited:
**CH-A- 485 417**
**FR-A-2 363 286**
**NL-A-7 607 188**
**US-A-2 690 970**
**US-A-2 832 093**
**US-A-3 121 449**
**US-A-3 332 106**

(73) Proprietor: **LANGEN RESEARCH B.V.**
**Beversestraat 4**
**NL-5431 SH Cuyk (NL)**

(72) Inventor: **Langen, Christianus Petrus**
**11, Zandkampen**
**NL-5431 BB Cuyk (NL)**
Inventor: **Menez, Jean**
**21, Rue Gaubin Loperhet**
**F-29213 Plougastel-Daoulas (FR)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for moulding meat in vacuo comprising a mandril, the external shape of which substantially corresponds with the internal shape of a mould for meat and the mandril being traversed by a hollow cylinder, the upper part of which communicates with the outlet of a meat feeding device, the mould to be filled being slipped from below onto the mandril until its bottom comes into contact with the lower surface of the mandril, an air-tight joint being provided between the upper rim of the mould, and the external surface of the mandril, whilst vacuum channels open out near the bottom of the mandril and displaceable cutting means are arranged in the bottom part of said mandril.

In a device as mentioned above and disclosed in FR—A—2.363.286 a meat mould to be filled is slipped from below onto the mandril until its bottom comes into contact with the lower surface of the mandril. During the filling operation the pieces of meat pushed out of the feeding device move downwards into the mould through the hollow cylinder and cause the mould to move downwards with respect to the mandril until it is filled. The meat feeding device is formed by a helix driven by a motor and fed from a funnel. One object of the invention is to improve the above-described device.

In the device described above the vacuum channels opening out at the bottom of the mandril tend to adsorb meat by suction during the filling operation. In the vacuum circuit is arranged a recipient for the absorbed meat, but this is only a makeshift, since the recipient is filled fairly soon. It is then necessary to stop the device to empty the recipient and restore it in its place.

A further object of the invention is to provide means to eliminate this inconvenience.

In the above-mentioned prior art device the bottom of the mandril is provided around the lower opening of the cylinder with a double wall in which cutting blades are displaceable so as to leave free the passage during the filling operation and to block the outlet of the cylinder between two filling operations. Since the diameter of the cylinder is large, for example, 5 cms, the simple cutting blades have difficulty in cutting a length of meat of the same diameter. This results in that at last piece(s) falling into the mould partially stick to the blades. This necessitates a manual operation to loosen the piece(s) of meat.

A further object of the invention is to provide means ensuring sharp cutting of the length of meat.

The device according to the invention is distinguished in that said channels opening out below the mandril can be connected with a source of pressurized air, whilst means are provided to disconnect the exhaust pump from said channels and for connecting them with the ambient atmospheric pressure or with a source of pressurized air at the termination of each mould filling operation, and in that the displaceable cutting means are provided with means for narrowing the outlet passage of said hollow cylinder, thereby ensuring sharp cutting of the length of meat.

It is noticed that CH—A—485.417 discloses a pressing-device for moulding meat in vacuo and provided with cutting means. However the device as disclosed is a different type of moulding device, having a cross-wise working pressing-ram.

In a first embodiment of the invention said means for narrowing the outlet passage is formed by a sliding plate, held in grooves provided in the thickness of the lower surface whilst the lower surface of said slidable plate is coplanar with said lower surface of the mandril there being means such that the plate is moved away from the passage during the filling operation and is moved on to partially block the outlet of said cylinder at the termination of each filling operation; a rotary cutting rotary blade is provided below said lower surface, which blade is movable away during the filling operation and is moved after each filling operation to cut the meat passing through the remainder of said partially blocked outlet.

According to a further feature the inlet of said channels are protected by small plates arranged in front of said inlets and supported by short pins integral with the lower surface of the mandril.

In a second embodiment of the invention a dosing cock is mounted in said cylinder, the axis of the cock being at right angles to the axis of the cylinder.

The above-mentioned and further features of the invention will become further apparent from the following description of embodiments with reference to the accompanying drawings, in which

Fig. 1 is a schematic, vertical sectional view of a moulding device embodying the invention during filling of a mould,

Fig. 2 is an enlarged sectional view of the bottom of the mandril of the device, below which the blocking means operating between two filling operations are mounted,

Fig. 3 is a sectional view taken on the line III—III of the means shown in fig. 2,

Fig. 4 is a schematic view of a vacuum connection provided with a filter,

Fig. 5 is a sectional view of the vacuum joint assembly mounted between a mould and the mandril of the kind shown in fig. 1 and

Fig. 6 is a perspective view, wherein parts are broken away, of a variant of the blocking means in fig. 2 and 3,

Fig. 7 is a schematic, vertical sectional view like fig. 1 of a second embodiment of a moulding device according to the invention before filling of the mould,

Fig. 8 is a sectional view according to fig. 7, wherein the hollow cylinder is entered into the mould,

Fig. 9 is a sectional side view of the embodiment in fig. 8,

Fig. 10 is a sectional view according to fig. 7 during the filling operation.

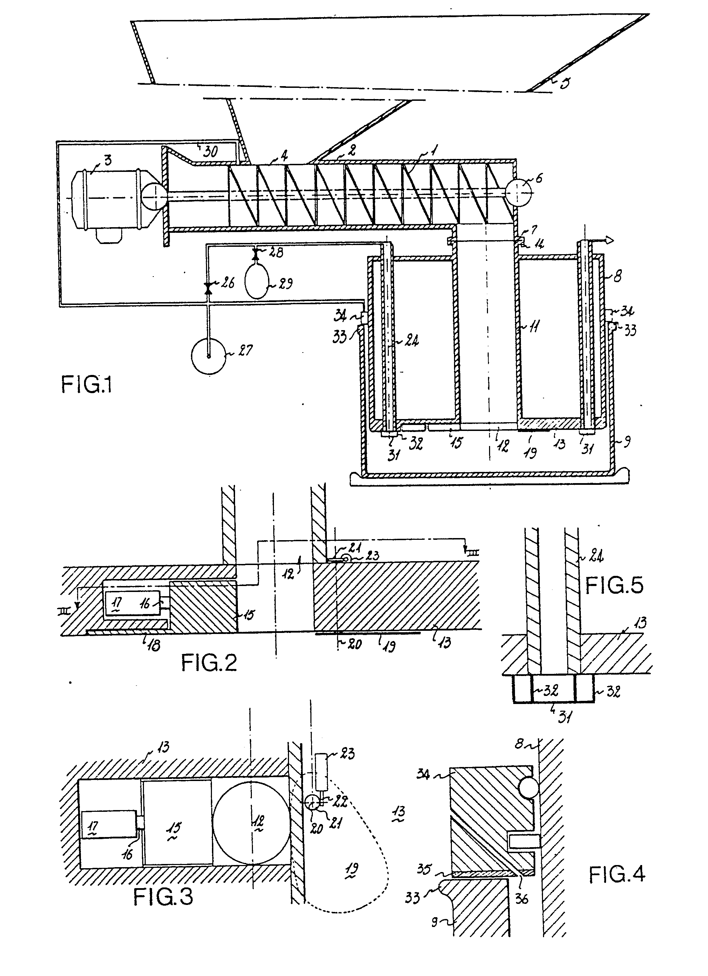

The moulding device of fig. 1 comprises a horizontal archimedian screw 1 mounted in a cylindrical housing 2 and driven by an electric motor 3. The housing 2 has an opening 4, above which a funnel 5 is mounted. At the other end of the screw 1 with respect to the motor 3 the shaft of the screw is held in a bearing 6. On the side of the bearing 6 the housing 2 is open on the underside and is connected with a vertical cylinder terminating in a flange 7.

The moulding device comprises furthermore a mandril 8, the general external shape of which corresponds with the general internal shape of a meat mould 9. Fig. 1 shows that the mould 9 bears on a suppporting platform 10 and is slipped from below onto the mandril 8.

In the centre of the mandril 8 is arranged a cylinder 11, which opens out below in an opening 12 in the bottom 13 of the mandril and which is provided on its upper part with a flange 14, which is connected with the flange 7. The upper end of the cylinder 11 is open to communicate with the interior of the housing 2.

Fig. 2 shows that in the bottom plate 13 a comparatively thick plate 15 is mounted opposite the oping 12. The plate 15 is integral with a pin 16 of a small lifting cylinder 17, which is also located in the thickness of the bottom 13. Below the lower surface of the plate 15 is fixed a rigid foil 18 which extends from the front edge of the plate 15 near the opening 12 rather far to the rear to mask the recess of the cylinder 17. The level of the lower surface of the foil 18 is substantially at the level of the lower surface of the bottom 13 around the plate 15.

On the other side of the opening 12 with respect to the plate 15 a cutting blade 19 is mounted below the bottom 13. In practice the blade 19 is fastened to a vertical shaft 20 passing through the bottom 13. Above the bottom 13 a pinion 21 is mounted on the shaft 20, which pinion is in mesh with a toothed rack 22 on the rod of a cylinder 23.

Fig. 3 shows the cylinders 17 and 23 in the rest position. The plate 15 and the blade 19 leave the opening 12 then fully free. When the opening 12 has to be blocked, the cylinder 17 is actuated in a first phase so that the plate 15 is advanced until its front edge reaches the centre of the opening 12 or slightly passes beyond the same. The cylidner 23 is actuated in a second phase to rotate the blade 19 in clockwise direction until it blocks the remainder of the opening 12. The edge of the blade 19 directed towards the opening 12 is ground.

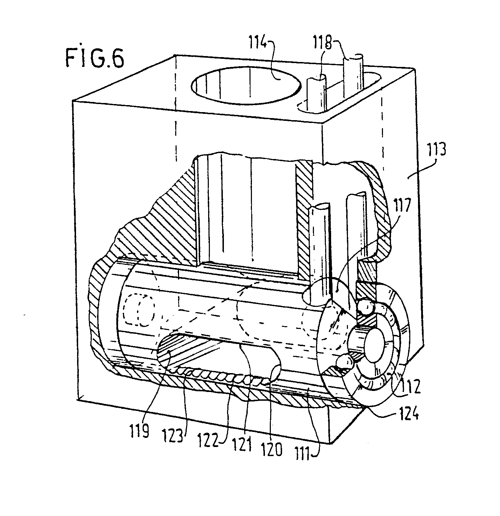

At least two vacuum channels 24 and 25 are passed through the bottom 13. They communicate on the one hand through a valve 28 with a compressed air reservoir 29. A further tube 30 opening out in the housing 2 of the screw 3 communicates with the exhaust pump 27. The openings of the channels 24 and 25 in the bottom 13 are protected by a kind of filter formed by small plates 31 mounted in front of the openings of the channels with the aid of short pins 32. These filters are shown in detail in fig. 5.

Around the mandril 8 above the upper rim 33 of a mould 9 is arranged an airtight joint 34, which is shown in detial in fig. 4 and which is of the same type as that used in the device disclosed in the French patent 2.363.286. However in the metal body 35 forming the base of the joint a plurality of apertures 36 are provided which open out freely at one end between the lateral surface of the mandril 8 and the internal surface of the mould 9. The other ends of the apertures 36 communicate via suitable connections with the exhaust pump 27 through the valve 26.

The support 10 of the mould 9 may be mounted on a dashpot as described in French patent 2.363.286.

The general operation of the moulding device will now be described with reference to fig. 1. Pieces of meat are poured into the funnel 5 and the motor 3 is actuated to drive the screw 1, which compels the pieces of meat to move towards the cylinder 11. The exhaust pump 27 is actuated immediately after the motor 3 so that the meat passing downwards in the funnel is disaered. Since the pieces of meat are at a distance from the tube 30 as soon as the screw is rotating, the tube 30 can constantly remain in communication with the pump 27, even if the tube 30 adsorbs some meat at a standstill of the screw.

Then a mould is put on the platform 10, which is lifted to slip the mould onto the mandril 8. The joint 34 is lowered to the rim of the mould. Since the valve 26 is open, the air between the bottom 13 and the bottom of the mould and between their lateral walls is sucked away by 24, 25 and 26.

The cylinders 17 and 23 are actuated to release the opening 12 and the screw 1 pushes down pieces of meat through the cylinder 11, the meat reaching the bottom of the mould 9, where it spreads below the bottom 13. When passing along the channels 24 and 25 the air bubbles, which may remain occluded in the mass of the meat in the housing 2 are sucked off. The filters 31, 32 prevent the channels 24 and 25 from absorbing too large bits of meat.

The pressure of the meat entering the mould 9 and its weight cause the platform 10 to move downwards. When the mould 9 is filled, a microcontact detecting this position stops the motor 3, the plate 15 being displaced to about midway of opening 12, after which the blade 19 is displaced. The effect of the plate 15 is simply the reduction of the section of the piece of meat to be cut by the blade 19 until the latter has performed its full turn. It is known that it is easier to cut a small-section string, even if it is hard, than to cut a broad, weak piece. The thickness of the plate 15 has to be sufficient to displace the meat without adversely affecting it. The valve 26 is then closed and the valve 28 is opened for a short time to admit to 24 and 25 jets of pressurized air which blow them free from any absorbed fragments of meat despite the filters. When arranging a further mould to be filled the initial conditions are restored.

Between the airtight joint 34 and the upper rim of the mould there may be arranged an intermediate, torus-shaped piece which allows the device to handle moulds of various shapes.

The figures 6 to 10 are related to a second embodiment of a moulding device of the invention. Said device is particularly adapted for ordinary pans for moulded meat, which pans are relatively thin walled. Such thin walled pans are not suitable to withstand the ambient atmospheric pressure when the pan is filled with meat under vacuum. To meet this problem an annular means 100 is slidably arranged around the hollow cylinder 101. The distance between said annular means and said hollow cylinder 101 is such that the ordinary pan 102 used as mould is able to be inserted in said space.

The airtight means 103 are here formed like a sleeve which is clamped on the upper surface of a plate-like member 104, underneath said annular means 100 is connected. Near the upper rim of said annular means a airtight ring of flexible material 105 is mounted to the lower surface of said plate-like member 104, against which the upper rim of the pan mould 102 is pressed during filling operation.

The plate-like member 104 is supported by stems, which are upwards and downwards movable by pneumatic means like cylinders (not shown).

The pan mould 102 is supported upon a table 107, which is also upwards and downwards movable by pneumatic means like cylinders (not shown).

The table is provided with an upstanding rim 108, whereupon a sleeve 109 of flexible material is arranged which cooperates with the bottom rim 110 of the annular means 100.

The described device is also provided with an alternative cutting means underneath the hollow cylinder for feeding the meat from the helics. Said cutting means are here in the form of a dosing cock, which is detailed in fig. 6.

The dosing cock is formed like a cylindrical body 111 which is rotatably supported in ball-bearings 112, which are taken up in a housing 113. The housing is provided with a through-channel 114, communicating with a tube 115 leading from the transport screw or hels 116, see fig. 9.

The housing 113 fits airtight within the circumferential wall of cylinder 101.

The cylindrical body 111 is near one extreme end provided with a spacing 117, whereas in said spacing a pair of pushing rods 118 are inserted, the bulb-like extreme ends of which are supported in correspondingly shaped surfaces of the spacing 117. The pair of rods 118 are preciprocatably up and down movable by pneumatic means like as cylinder (not shown). It will be clear from the drawings that when pushing the upper rods, the right one in fig. 9, downwards, the cylindrical body 111 will rotate clockwise whilst the left rod will counter rotate said body 111.

The body 111 is provided with a through-hole 119 which can communicate in one position of the body with the through-hole 114 in the housing 113. The through-hole 119 is formed such that the circular through-hole 114 will transform in an oblong orifice 120 in the outer cylindrical wall of said body 111. The orifice 120 has two parallel side edges 121, parallel to the rotational axis of the body 111.

One of the edges 122 is provided with indentations 123 in order to form dents, which are able to cooperate with a cutting rim 124 of the housing 113. The cutting rim 124 will narrowly fit against the cylindrical outer wall of the body 111, which is located such that said outer wall protrudes underneath the lower surface of the housing 113; see fig. 9.

Owing to these measures it is now possible to block the through-way from tube 115 into the pan mould 102 by turning over a certain angle the dosing cock body 111 and to cut off the meat as well. So ameliorating the filling operation of the presen embodiment.

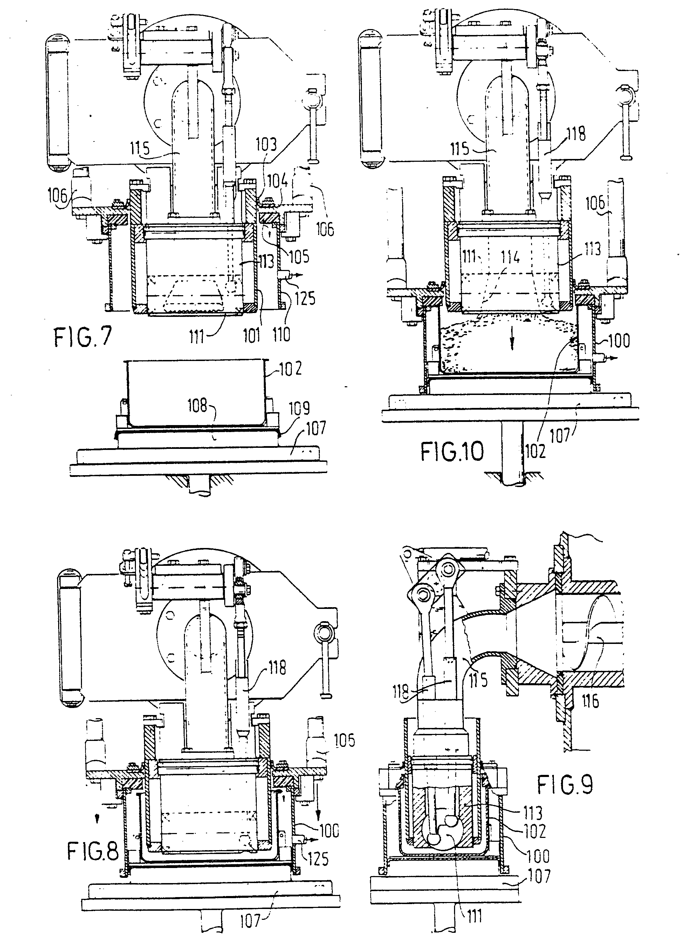

The working of the above mentioned embodiment is as follows: starting from the position of the device as shown in fig. 7 the pan mould 102 can be placed manually upon the support 107, whereupon the support 107 can be raised, whereas simultaneously the annular means 100 will be lowered such that the bottom rim 110 will fit around the sleeve 109 on support 107. So an airtight closing between the annular means 100 and the support 107 is effected, whilst the airtight means 103 forms the closing between the annular means 100 and the cylinder 101. This position is shown in fig. 8. It is noticed that there is still left an opening between the flexible ring 105 and the upper rim of the pan mould 102.

Since the annular means 100 are connected via a tube 125 to a vacuum source, the space between the hollow cylinder 101 and the annular means 100 can be sucked vacuum, including the contents of the pan mould 102.

When the desired vacuum is achieved, the plate-like member 104 is lowered further, so that the upper rim of the pan mould 102 will closely touch the annular member 105.

The filling operation starts after the cylindrical body 101 is placed in such a position that the through-hole 119 is in line with the through-hole 114 in the housing 113.

During the filling operation the support table 107 will be lowered, whereas the plate-like member 104 will also be lowered in order to keep the airtight closing between the different parts.

After the filling operation the cylindrical body 111 will be turned clockwise into the position as shown in fig. 6, so closing off the channel 114 whereas the meat is cutted by the dents 123 and cutting edge 124.

Atmospheric pressure can be brought again within the annular means 100 in the way as described hereabove, whereupon the supporting table can be lowered and the annular means 100 can be raised to the position as shown in fig. 7.

## Claims

1. A device for moulding meat in vacuo comprising a mandril (8, 101), the external shape of which substantially corresponds with the internal shape of a mould (9, 102) for meat and the said mandril being traversed by a hollow cylinder (11, 114), the upper part of which communicates with the outlet of a meat feeding device (1, 115), the mould to be filled being slipped from below onto the said mandril until its bottom comes into contact with the lower surface of the mandril, an airtight joint (34, 103—113) being provided between the upper rim of the mould (9, 102), and the external surface of the mandril, whilst vacuum channels (24, 25, 125) open out near the bottom of the mandril and displaceable cutting means (19, 113) are arranged in the bottom part of said mandril, characterized in that said channels opening out below the mandril can be connected with a source of pressurized air, whilst means are provided to disconnect the exhaust pump from said channels and for connecting them with the ambient atmospheric pressure or with a source of pressurized air at the termination of each mould filling operation, and in that the displaceable cutting means are provided with means (15, 111) for narrowing the outlet passage of said hollow cylinder (11, 114) thereby ensuring sharp cutting of the length of meat.

2. A device as claimed in claim 1, characterized in that said means for narrowing the outlet passage of said hollow cylinder 11 is formed by a slidable plate (15) held in grooves provided in the thickness of the lower surface (13) of the mandril (8), whilst the lower surface of said slidable plate (15) is coplanar with said lower surface of the mandril (8), there being means (16) such that the plate is moved away from the passage during the filling operation and is moved on to partially block the outlet of said cylinder at the termination of each filling operation; a rotary cutting blade (19) is provided below said lower surface, which blade (19) is movable away during the filling operation and is moved after each filling operation to cut the meat passing through the remainder of said partially blocked outlet.

3. A device as claimed in claims 1 and 2, characterized in that the inlets of said channels (24) are protected by filters (31).

4. A device as claimed in claim 3, characterized in that the filters are formed by small plates (31) arranged in front of the inlets of the channels (24) and supported by short pins (32) integral with the lower surface (13) of the mandril (8).

5. A device as claimed in claim 1, characterized in that as means for narrowing the outlet passage a cylindrical dosing cock (111) is mounted in said cylinder (14), and provided with a through-hole (119), opening in the cylindrical wall of the cock body (111) as an oblong orifice (120) having parallel edges (121), the axis of said through-hole being at right angles to the axis of said cylindrical cock body (111).

6. A device as claimed in claim 5, characterized in that the cylindrical outer wall of the cock body (111) protrudes from the bottom face of said hollow cylinder (114), so forming a cutting means.

7. A device as claimed in claims 5 and 6, characterized in that at least one of said edges (121) is provided with indentations (123) in order to form cutting dents.

8. A device as claimed in any one of claims 1 to 7, characterized in that the airtight joint (34, 103, 113) has holes subjected to vacuum and opening out between the external lateral wall of the mandril (8, 101) and the lateral internal surface of the mould (9, 102).

9. A device as claimed in any one of the previous claims, characterized in that an annular means (100) enveloping said mould (102) is provided with an upper rim cooperating with said airtight joint (113).

10. A device as claimed in claim 9, characterized in that said annular means (100) are reciprocatably movable with respect to said hollow cylinder (101) and mould (102) as well, whereas said annular means (100) is provided with a bottom rim (110) cooperating with an airtight joint (109) of the mould support (107).

## Patentansprüche

1. Vorrichtung zum Formen von Fleisch im Vakuum mit einem Dorn (8, 101), dessen äußere Gestalt im wesentlichen der inneren Gestalt einer Fleischform (9, 102) entspricht, wobei der Dorn durch einen Hohlzylinder (11, 114) durchbrochen ist, dessen oberer Teil mit dem Auslaß einer Fleischzuführvorrichtung (1, 115) in Verbindung steht, und die zu füllende Form von unten auf den Dorn aufgeschoben ist, bis dessen Boden die untere Oberfläche des Dorns berührt, wobei eine luftdichte Verbindung (34, 103—113) zwischen dem oberen Rand der Form (9, 102) und der äußeren Oberfläche des Dorns vorgesehen ist, während Vakuumkanäle (24, 25, 125) sich nahe des Bodens des Dorns öffnen und verschiebbare Schneideeinrrichtungen (19, 113) im Bodenteil des Dorns angeordnet sind, dadurch gekennzeichnet, daß die sich unterhalb des Dorns öffnenden Kanäle mit einer Preßluftquelle verbunden werden können, während Einrichtungen vorgesehen sind, um die Saugpumpe von den Kanälen zu trennen und sie mit dem umgebenden atmosphärischen Druck oder mit einer Preßluftquelle beim Beenden eines jeden Formfüllvorgangs zu verbinden, und daß die verschiebbaren Schneideeinrichtungen mit Einrichtungen (5, 111) versehen sind, die den Auslaßdurchgang des Hohlzylinders (11, 114) verengen und auf diese Weise ein scharfes Schneiden der Fleischlängen sicherstellen.

2. Vorrichtung nach Anspruch 1, dadurch gekennzeichnet, daß die Einrichtungen zur Verengung des Auslaßdurchgangs des Hohlzylinders (11) durch eine verschiebbare Platte (15) gebildet ist, die in, in der Dicke der unteren Oberfläche (13) des Dorns (8) vorgesehenen Nuten geführt ist, während die untere Oberfläche der verschiebbaren Platte (15) koplanar mit der unteren Oberfläche des Dorns (8) ist, wobei dort Einrichtungen (16) so vorgesehen sind, daß die Platte während des Füllvorgangs von dem Durchgang wegbeweglich ist und weiter bewegt wird, um den Auslaß des Zylinders teilweise zu behindernbeim Beenden eines jeden Füllvorgangs; ein rotierendes Schneideblatt (19) unterhalb der unteren Oberfläche vorgesehen ist, dessen Blatt (19) während des Füllvorgangs wegbewegbar ist und nach jedem Füllvorgang bewegt wird, um das Fleisch, das durch den verbleibenden Teil des teilweise blockierten Auslasses durchfließt, abzuschneiden.

3. Vorrichtung nach Anspruch 1 und 2, dadurch gekennzeichnet, daß die Öffnungen der Kanäle (24) durch Filter (31) geschützt sind.

4. Vorrichtung nach Anspruch 3, dadurch gekennzeichnet, daß die Filter durch kleine Platten (31) gebildet sind, die gegenüber den Öffnungen der Kanäle (24) angeordnet sind und die unterstützt werden durch kurze Stifte (32), die einstückig mit der unteren Oberfläche (139) des Dorns (8) sind.

5. Vorrichtung nach Anspruch 1, dadurch gekennzeichnet, daß als Einrichtungen zur Verengung des Auslaßdurchgangs ein zylindrischer Dosierhahn (111) in dem Zylinder (14) montiert ist und mit einer Durchgangsöffnung (119) versehen ist, die sich in der zylindrischen Wand des Hahnkörpers (111) als eine längliche Öffnung (120) mit parallelen Kanten (121) öffnet, wobei die Achse der Durchgangsöffnung im rechten Winkel zu der Achse des zylindrischen Hahnkörpers (111) ist.

6. Vorrichtung nach Anspruch 5, dadurch gekennzeichnet, daß die zylindrische äußere Wand des Hahnkörpers (111) von der Bodenfläche des Hohlzylinders (114) hervorragt und so eine Schneideeinrichtung bildet.

7. Vorrichtung nach Anspruch 5 und 6, dadurch gekennzeichnet, daß wenigstens eine der Kanten (121) mit Zacken (123) versehen ist, um Schneidezähne zu bilden.

8. Vorrichtung nach einem der Ansprüche 1 bis 7, dadurch gekennzeichnet, daß die luftdichte Verbindung (34, 103, 113) Öffnungen aufweist, die dem Vakuum unterworfen sind und sich zwischen der äußeren seitlichen Wand des Dorns (8, 101) und der seitlichen inneren Oberfläche der Form (9, 102) öffnen.

9. Vorrichtung nach einem der vorgenannten Ansprüche, dadurch gekennzeichnet, daß eine ringförmige Einrichtung (100), die die Form (102) ummantelt, mit einem oberen Rand, der mit der luftdichten Verbindung (113) zusammenwirkt, versehen ist.

10. Vorrichtung nach Anspruch 9, dadurch gekennzeichnet, daß die ringförmige Einrichtung (100) hin und her bewegbar ist, sowohl hinsichtlich des Hohlzylinders (101) als auch hinsichtlich der Form (102), wobei diese ringförmige Enrichtung (100) mit einem bodenseitigen Rand (110) versehen ist, der mit einer luftdichten Verbindung (109) des Formträgers (107) zusammenwirkt.

**Revendications**

1. Dispositif pour mouler de la viande sous vide, comprenant un mandrin (8, 101) dont la forme extérieure correspond sensiblement à la forme intérieure d'un moule (9, 102) destiné au moulage de la viande et ledit mandrin étant traversé par un cylindre creux (11, 114) dont la partie supérieure communique avec la sortie d'un dispositif alïmentateur de viande (1, 115), le moule à remplir étant emmanché de bas en haut sur ledit mandrin jusqu'à ce que son fond entre en contact avec la surface inférieure du mandrin, un joint d'étanchéité à l'air (34, 103, 113) étant prévu entre le bord supérieur du moule (9, 102) et la surface extérieure du mandrin, tandis que des conduits de vide (24, 25, 125) débouchent dans la région du fond du mandrin, et que des moyens de coupes mobiles (19, 113) sont agencés dans la partie de fond dudit mandrin, caractérisé par le fait que lesdits conduits qui débouchent sous le mandrin peuvent être raccordés à une source d'air comprimé tandis que des moyens sont prévus pour déconnecter la pompe à vide desdits conduits et pour les relier à la pression atmosphérique ambiante ou à une source d'air comprimé à la fin de chaque opération de remplissage de moule, et par le fait que les moyens de coupe mobiles sont équipés de moyens (15, 111) permettant de rétrécir le passage de sortie dudit cylindre creux (11, 114), en garantissant ainsi une coupe nette de la longueur de viande.

2. Dispositif selon la revendication 1, caractérisé en ce que lesdits moyens servant à rétrécir le passage de sortie dudit cylindre creux (11) sont formés par une plaque coulissante (15) tenue dans des rainures ménagées dans l'épaisseur de la surface inférieure (13) du mandrin (8), tandis que la surface inférieure de ladite plaque coulissante (15) est située dans le même plan que ladite surface inférieure du mandrin (8), cependant qu'il est prévu des moyens (16) tels que la plaque soit écartée du passage pendant l'opération de remplissage et amenée dans ce passage pour fermer partiellement l'ouverture du cylindre à la fin de chaque opération de remplissage, une lame coupante tournante (19) étant prévue au-dessous de ladite surface inférieure, ladite lame (19) pouvant être écartée pendant l'opération de remplissage et poussée après chaque opération de remplissage pour couper la viande qui passe à travers le reste de ladite sortie partiellement fermée.

3. Dispositif selon les revendications 1 et 2, caractérisé en ce que les entrées desdits conduits (24) sont protégées par des filtres (31).

4. Dispositif selon la revendication 3, caractérisé en ce que les filtres sont formés de petites plaquettes (31) disposées en face des entrées des conduits (24) et supportées par de courtes tiges (32) qui sont solidaires de la surface inférieure (13) du mandrin (8).

5. Dispositif selon la revendication 1, caractérisé en ce que, en qualité de moyens permettant de rétrécir le passage de sortie, un obturateur doseur tournant cylindrique (111) est monté dans ledit cylindre (14) et muni d'un trou traversant (119) qui débouche dans la paroi cylindrique dudit corps d'obturateur tournant (111) sous la forme d'un orifice allongé (120) présentant des bords parallèles (121), l'axe dudit trou traversant étant perpendiculaire à l'axe dudit corps d'obturateur tourant cylindrique (111).

6. Dispositif selon la revendication 5, caractérisé en ce que la paroi extérieure cylindrique du corps d'obturateur tournant (111) fait saillie au-delà de la face inférieure dudit cylindre creux (114) pour former des moyens de coupe.

7. Dispositif selon les revendications 5 et 6, caractérisé en ce qu'au moins l'un desdits bords (121) est muni d'indentations (123) pour former des dents coupantes.

8. Dispositif selon l'une quelconque des revendications 1 à 7, caractérisé en ce que le joint d'étanchéité à l'air (34, 103, 113) présente des trous pouvant être raccordés au vide et qui débouchent entre la paroi latérale extérieure du mandrin (8, 101) et la surface latérale interne du moule (9, 102).

9. Dispositif selon l'une quelconque des revendications précédentes, caractérisé en ce que des moyens annulaires (100) qui enveloppent ledit moule (102) sont munis d'un bord supérieur qui coopère avec ledit joint d'étanchéité à l'air (113).

10. Dispositif selon la revendication 9, caractérisé en ce que lesdits moyens annulaires (100) peuvent être déplacés en mouvement alternatif par rapport audit cylindre creux (101) et au moule (102) tandis que lesdits moyens annulaires (100) munis d'un bord inférieur (110) qui coopère avec un joint d'étanchéité à l'air (109) du support (107) du moule.

FIG.1

FIG.2

FIG.3

FIG.4

FIG.5

FIG.6

FIG.7

FIG.8

FIG.9

FIG.10